# EUROPEAN PATENT APPLICATION

(11) **EP 4 155 049 A1**
(43) Date of publication of application: **29.03.2023**
(21) Application number: 21199164.1
(22) Date of filing: 27.09.2021
(51) Int. Cl.: B29C 45/16, A24F 40/10, A24F 40/40, A24F 40/70

(54) **METHOD AND AEROSOL DELIVERY COMPONENT**

(71) Applicant: NERUDIA LIMITED, Liverpool Merseyside L24 9HP (GB)
(72) Inventor: LOMAS, Peter, Speke Liverpool, L24 9HP (GB); MCGUINNESS, Molly, Speke Liverpool, L24 9HP (GB)
(74) Representative: Mewburn Ellis LLP

(57) **Abstract**

The present disclosure relates to a method of manufacturing a base portion for an aerosol delivery component (e.g. a smoking substitute component). The method comprises the steps of: injecting a first plastic into a first mould to form a rigid plastic vaporiser support; transferring the vaporiser support to a second mould; and injecting a second plastic into the second mould to form at least one compressible sealing gasket on the vaporiser support to thereby form the base portion. There is also disclosed an integrally moulded base portion for an aerosol delivery component, the base portion comprising: a vaporiser support formed of a rigid plastic; and a sealing gasket formed of compressible plastic over-moulded on the vaporiser support for sealing against an internal surface of the aerosol delivery component.

## Description

### Technical field

The present disclosure relates to an aerosol delivery component and a method of manufacturing an aerosol delivery component such as a smoking substitute component.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful by-products. There have been proposed various smoking substitute systems in order to avoid the smoking of tobacco.

Such smoking substitute systems can form part of nicotine replacement therapies aimed at people who wish to stop smoking and overcome a dependence on nicotine.

Smoking substitute systems, which may also be known as electronic nicotine delivery systems, may comprise electronic systems that permit a user to simulate the act of smoking by producing an aerosol, also referred to as a "vapour", which is drawn into the lungs through the mouth (inhaled) and then exhaled. The inhaled aerosol typically bears nicotine and/or flavourings without, or with fewer of, the odour and health risks associated with traditional smoking.

In general, smoking substitute systems are intended to provide a substitute for the rituals of smoking, whilst providing the user with a similar experience and satisfaction to those experienced with traditional smoking and tobacco products.

The popularity and use of smoking substitute systems has grown rapidly in the past few years. Although originally marketed as an aid to assist habitual smokers wishing to quit tobacco smoking, consumers are increasingly viewing smoking substitute systems as desirable lifestyle accessories. Some smoking substitute systems are designed to resemble a traditional cigarette and are cylindrical in form with a mouthpiece at one end. Other smoking substitute systems do not generally resemble a cigarette (for example, the smoking substitute device may have a generally box-like form).

There are a number of different categories of smoking substitute systems, each utilising a different smoking substitute approach. A smoking substitute approach corresponds to the manner in which the substitute system operates for a user.

One approach for a smoking substitute system is the so-called "vaping" approach, in which a vaporisable liquid, typically referred to (and referred to herein) as "e-liquid", is heated by a heater to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerine.

A typical vaping smoking substitute system includes a mouthpiece, a power source (typically a battery), a tank or liquid reservoir for containing e-liquid, as well as a heater. In use, electrical energy is supplied from the power source to the heater, which heats the e-liquid to produce an aerosol (or "vapour") which is inhaled by a user through the mouthpiece.

Vaping smoking substitute systems can be configured in a variety of ways. For example, there are "closed system" vaping smoking substitute systems which typically have a heater and a sealed tank which is pre-filled with e-liquid and is not intended to be refilled by an end user. One subset of closed system vaping smoking substitute systems include a device which includes the power source, wherein the device is configured to be physically and electrically coupled to a component including the tank and the heater. In this way, when the tank of a component has been emptied, the device can be reused by connecting it to a new component.

An example vaping smoking substitute system is the myblu^{™} e-cigarette. The myblu^{™} e cigarette is a closed system which includes a device and a consumable component. The device and consumable component are physically and electrically coupled together by pushing the consumable component into the device. The device includes a rechargeable battery. The consumable component includes a mouthpiece, a sealed tank which contains e-liquid, as well as a vaporiser, which for this system is a heating filament coiled around a portion of a wick which is partially immersed in the e-liquid. The system is activated when a microprocessor on board the device detects a user inhaling through the mouthpiece. When the system is activated, electrical energy is supplied from the power source to the vaporiser, which heats e-liquid from the tank to produce a vapour which is inhaled by a user through the mouthpiece.

The component typically includes a base portion which seals the tank and supports the vaporiser. Electrical contacts to connect the vaporiserto the battery in the device typically extend through the base portion. A gasket (e.g. an o-ring) surrounds the base portion to seal against the inner surfaces of the tank. The gasket/o-ring is currently manually fitted to the base portion after manufacture of the base portion. This is time-consuming and thus increases manufacturing costs. Furthermore, dislodgement of the gasket/o-ring during subsequent manufacturing steps can result in a faulty component prone to leakage of e-liquid from the tank around the base portion.

Accordingly, there is a need for an improved method of manufacturing an aerosol delivery component.

### Summary

According to a first aspect, there is provided a method of manufacturing a base portion for an aerosol delivery component (e.g. a smoking substitute component), the method comprising the steps of:
injecting a first plastic into a first mould to form a rigid plastic vaporiser support;
transferring the vaporiser support to a second mould; and
injecting a second plastic into the second mould to form a compressible sealing gasket portion on the vaporiser support to thereby form the base portion.

In this way, the base portion can be manufactured in a twin-shot injection moulding process without requiring manual assembly of the gasket/o-ring to form the base portion. This reduces assembly time and costs and the over-moulded gasket is less susceptible to dislodgment during subsequent manufacturing steps. In turn, this reduces the chances of leakage from the component.

Optional features will now be set out. These are applicable singly or in any combination with any aspect.

The first plastic may be injected into the first mould so as to form a rigid plastic vaporiser support having an end portion with an end face. The end portion may comprise a longitudinally-extending perimeter wall. The longitudinally-extending perimeter wall may comprise a perimeter groove extending at least partially and preferably entirely around the perimeter wall of the end portion.

The first plastic may be injected into the first mould so as to form a longitudinally-extending moulding gate in the perimeter wall of the end portion extending between the end face of the end portion and the perimeter groove. The moulding gate may comprise a longitudinally-extending channel recessed into the perimeter wall.

The second plastic may be injected (e.g. into the moulding gate) to form a perimeter gasket extending at least partially and preferably entirely around the perimeter wall (e.g. in the perimeter groove) of the end portion of the vaporiser support.

After removal of the base portion from the second mould, the method may further comprise sealing the perimeter gasket against the inner surface of a tank housing.

The first plastic may be injected into the first mould so that the end portion comprises at least one aperture (e.g. a pair of apertures) extending from the end face to an opposing inner face of the end portion. The inner face of the end portion may comprise a support portion for supporting a wick. The support portion may be upstanding from the inner face of the end portion and may comprise an annular wall having opposing channels for receiving the wick.

The method may further comprise (after removal of the base portion from the second mould) insertion of a vaporiser comprising a wick having a coiled heating element into the support portion of the vaporiser support with opposing ends of the wick supported in the opposing channels.

The first plastic may be injected into the first mould so that the perimeter wall of the end portion comprises at least one longitudinally-extending gasket channel (distinct and remote from the moulding gate) extending from the perimeter groove to the end face proximal the at least one aperture.

The second plastic may be injected into the second mould (e.g. into the moulding gate) to form a respective contact gasket in the at least one aperture. The injected first plastic will first fill the perimeter groove to form the perimeter gasket and then will flow from the perimeter groove through the at least one gasket channel so as to form the at least one contact gasket lining the respective aperture. The/each contact gasket will have a respective gasket aperture.

The method may further comprise (after removal of the base portion from the second mould), inserting a respective electrical contact through the gasket aperture for connection with the heating element. In this way, sealing gaskets to seal both the tank and the electrical contacts can be formed in a single injection moulding step.

The first plastic may be thermoset plastic material e.g. polypropylene.

The second plastic may be a thermoplastic material e.g. polyurethane.

The first plastic and second plastic base be different colours. The colour of the first and/or second plastic may be selected to provide a visual indication of a characteristic (e.g. nicotine strength and/or flavour) of the component.

The vaporiser support may be moved from the first mould to the second mould using a robotic arm. The base portion may be removed from the second mould using the or a second robotic arm.

The first and second moulds may be provided in a single press.

In some embodiments, as the second plastic is injected into the second mould, the first plastic may be injected into the first mould to form a second rigid plastic vaporiser support. The second vaporiser support may then be moved (e.g. using the robotic arm) to the second mould after the base portion has been removed from the second mould for subsequent injection of the second plastic into the second mould to form a second base portion.

In a second aspect, there is provided an integrally moulded base portion for an aerosol delivery component (e.g. a smoking substitute component), the base portion comprising:
a vaporiser support formed of a rigid plastic; and
a sealing gasket portion formed of compressible plastic over-moulded on the vaporiser support for sealing against an internal surface of the aerosol delivery component.

The sealing gasket portion may comprise an external sealing gasket i.e. provided on an external surface of the vaporiser support for sealing between the vaporiser support and the internal surface of the aerosol delivery component.

The vaporiser support may have an end portion with an end face. The end portion may comprise a longitudinally-extending perimeter wall. The longitudinally-extending perimeter wall may comprise a perimeter groove extending at least partially and preferably entirely around the perimeter wall of the end portion.

The perimeter wall may comprise a longitudinally-extending moulding gate extending between the end face of the end portion and the perimeter groove. The moulding gate may comprise a longitudinally-extending groove recessed into the surface of the perimeter wall. The moulding gate may be filled with the compressible plastic which may be flush with the surface of the perimeter wall of the end portion.

The sealing gasket portion may comprise a perimeter gasket located on the perimeter wall e.g. in the perimeter groove of the end portion of the vaporiser support. The perimeter gasket may extend at least partially and preferably entirely around the perimeter wall of the end portion. The perimeter gasket extends radially/laterally from the perimeter wall i.e. is proud of the surface of the perimeter wall.

The gasket portion may further comprise at least one contact gasket (e.g. a pair of contact gaskets) formed of the compressible plastic. For example, the end portion of the vaporiser support may comprise at least one aperture (e.g. a pair of apertures) extending from the end face to an opposing inner face of the end portion. The at least one contact gasket may line the at least one aperture. The/each contact gasket will have a respective gasket aperture.

The vaporiser support may comprise at least one longitudinally-extending gasket channel formed in the perimeter wall and extending from the perimeter groove to the end face of the end portion of the vaporiser support proximal the respective aperture.

The inner face of the end portion may comprise a support portion for supporting a wick. The support portion may be upstanding from the inner face of the end portion and may comprise an annular wall having opposing channels for receiving the wick.

The rigid plastic may be thermoset plastic material e.g. polypropylene.

The compressible plastic may be a thermoplastic material e.g. polyurethane.

The rigid plastic and compressible plastic may be different colours. The colour of the rigid and/or compressible plastic may be selected to provide a visual indication of a characteristic (e.g. nicotine strength and/or flavour) of the component.

In a third aspect, there is provided an aerosol delivery component (e.g. a smoking substitute component) comprising a base portion according to the second aspect.

The perimeter gasket may be sealed against the inner surface of a tank housing.

The component may further comprise a vaporiser having a wick with a coiled heating element mounted on the support portion of the vaporiser support with opposing ends of the wick supported in the opposing channels.

The component may further comprise at least one electrical contact extending through a respective the gasket aperture for connection with the heating element. The at least one contact gasket will seal against the respective electrical contact.

The smoking substitute component may comprise an airflow path therethrough, the airflow path extending from an air inlet to an outlet. The air inlet may be provided in the base portion e.g. in the vaporiser support. The outlet may be at a mouthpiece portion of the component. In this respect, a user may draw fluid (e.g. air) into and along the airflow path by inhaling at the outlet (i.e. using the mouthpiece).

The airflow path passes the vaporiser between the air inlet and the outlet.

The airflow path may comprise a first portion extending from the air inlet towards the vaporiser. The second portion of the airflow path passes through a vaporising chamber to a conduit that extends to the outlet. The conduit may extend along the axial centre of the component.

References to "downstream" in relation to the airflow path are intended to refer to the direction towards the outlet/mouthpiece portion. Thus the second portion of the airflow path is downstream of the first portion of the airflow path. Conversely, references to "upstream" are intended to refer to the direction towards the air inlet. Thus the first portion of the airflow path (and the air inlet) is upstream of the second portion of the airflow path (and the air outlet/mouthpiece portion).

References to "upper", "lower", "above" or "below" are intended to refer to the component when in an upright/vertical orientation i.e. with elongate (longitudinal/length) axis of the component vertically aligned and with the mouthpiece vertically uppermost.

The component may comprise a tank for housing the aerosol precursor (e.g. a liquid aerosol precursor). The aerosol precursor may comprise an e-liquid, for example, comprising a base liquid and e.g. nicotine. The base liquid may include propylene glycol and/or vegetable glycerine.

At least a portion of the tank housing defining the tank may be translucent or transparent.

The conduit may extend through the tank with the conduit walls defining an inner region of the tank. In this respect, the tank may surround the conduit e.g. the tank housing may be annular.

As discussed above, the air flow path passes the vaporiser between the air inlet and the outlet.

The wick may be an elongate wick which may have a cylindrical shape. The wick may be oriented so as to extend in the direction of the width dimension of the component (perpendicular to the longitudinal axis of the component). Thus the wick may extend in a direction perpendicular to the direction of airflow in the airflow path.

The wick/heating element may be disposed in the vaporising chamber. The vaporising chamber may form part of the airflow path.

The wick may comprise a porous material. A portion of the wick may be exposed to airflow in the airflow path. The wick may also comprise one or more portions in contact with liquid aerosol precursor stored in the tank. For example, the opposing ends of the wick supported in the opposing channels of the support portion of the vaporiser support may protrude into the tank and a central portion (between the ends) may extend across the airflow path so as to be exposed to airflow. Thus, fluid may be drawn (e.g. by capillary action) along the wick, from the tank to the exposed portion of the wick.

The heating element may be in the form of a filament wound about the wick (e.g. the filament may extend helically about the wick). The filament may be wound about the exposed portion of the wick. The heating element is electrically connected (or connectable) to the power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in airflow along the airflow path. This vapour may subsequently cool to form an aerosol e.g. in the conduit.

In a fourth aspect there is provided an aerosol-delivery system (e.g. a smoking substitute system) comprising a component according to the first aspect and an aerosol-delivery (e.g. smoking substitute) device.

The component may be an aerosol-delivery (e.g. a smoking substitute) consumable i.e. in some embodiments the component may be a consumable component for engagement with the aerosol-delivery (e.g. a smoking substitute) device to form the aerosol-delivery (e.g. s smoking substitute) system.

The device may be configured to receive the consumable component. For example the device and the consumable component may be configured to be physically coupled together. For example, the consumable component may be at least partially received in a recess of the device, such that there is snap engagement between the device and the consumable component. Alternatively, the device and the consumable component may be physically coupled together by screwing one onto the other, or through a bayonet fitting.

Thus, the consumable component may comprise one or more engagement portions for engaging with the device.

The consumable component may comprise an electrical interface for interfacing with a corresponding electrical interface of the device. The component electrical interface will comprise the at least one electrical contact.

Thus, when the device is engaged with the consumable component, the electrical interface may be configured to transfer electrical power from the power source to the heating element of the consumable component. The electrical interface may also be used to identify the consumable component from a list of known types. The electrical interface may additionally or alternatively be used to identify when the consumable component is connected to the device.

The device may alternatively or additionally be able to detect information about the consumable component via an RFID reader, a barcode or QR code reader. This interface may be able to identify a characteristic (e.g. a type) of the consumable. In this respect, the consumable component may include any one or more of an RFID chip, a barcode or QR code, or memory within which is an identifier and which can be interrogated via the interface.

In other embodiments, the component may be integrally formed with the aerosol-delivery (e.g. a smoking substitute) device to form the aerosol-delivery (e.g. s smoking substitute) system.

In such embodiments, the aerosol former (e.g. e-liquid) may be replenished by re-filling a tank that is integral with the device (rather than replacing the consumable). Access to the tank (for re-filling of the e-liquid) may be provided via e.g. an opening to the tank that is sealable with a closure (e.g. a cap).

Further features of the device are described below. These are applicable to both the device for receiving a consumable component and to the device integral with the component.

The device may comprise a power source. The power source may be a battery. The power source may be a capacitor. The power source may be a rechargeable power source. The device may comprise a charging connection for connection to an external power supply for recharging of the power source within the device.

The device may comprise electrical circuitry configured to control the supply of power from the power source to the vaporiser.

The device may comprise a controller. A memory may be provided and may be operatively connected to the controller. The memory may include non-volatile memory. The memory may include instructions which, when implemented, cause the controller to perform certain tasks or steps of a method. The device may comprise a wireless interface, which may be configured to communicate wirelessly with another device, for example a mobile device, e.g. via Bluetooth^{®}. To this end, the wireless interface could include a Bluetooth^{®} antenna. Other wireless communication interfaces, e.g. WiFi^{®}, are also possible. The wireless interface may also be configured to communicate wirelessly with a remote server.

An airflow (i.e. puff) sensor may be provided that is configured to detect a puff (i.e. inhalation from a user). The airflow sensor may be operatively connected to the controller so as to be able to provide a signal to the controller that is indicative of a puff state (i.e. puffing or not puffing). The airflow sensor may, for example, be in the form of a pressure sensor or an acoustic sensor. The controller may control power supply to a heating element in response to airflow detection by the sensor. The control may be in the form of activation of the heating element in response to a detected airflow. The airflow sensor may form part of the device.

The device may comprise a device body for housing the power source and/or other electrical components. The device body may be an elongate body i.e. with a greater length than depth/width. It may have a greater width than depth.

In a fifth aspect there is provided a method of using the aerosol-delivery (e.g. smoking substitute) consumable component according to the third aspect, the method comprising engaging the consumable component with an aerosol-delivery (e.g. smoking substitute) device (as described above) having a power source so as to electrically connect the power source to the consumable component (i.e. to the vaporiser of the consumable component).

The invention includes the combination of the aspects and preferred features described except where such a combination is clearly impermissible or expressly avoided.

### BRIEF DESCRIPTION OF THE DRAWINGS

So that further aspects and features thereof may be appreciated, embodiments will now be discussed in further detail with reference to the accompanying figures, in which:
- Fig. 1A is a front schematic view of a smoking substitute system;
- Fig. 1B is a front schematic view of a device of the system;
- Fig. 1C is a front schematic view of a component of the system;
- Fig. 2A is a schematic of the electrical components of the device;
- Fig. 2B is a schematic of the parts of the component;
- Fig. 3 shows a method according the a first embodiment;
- Fig. 4 shows a separated vaporiser support and gasket portion formed by the method of Figure 3;
- Fig. 5 shows the integrally formed base portion in an upright orientation;
- Fig. 6 shows the base portion in an inverted configuration; and
- Fig. 7 shows a cross section through the base portion.

### DETAILED DESCRIPTION OF THE EMBODIMENTS

Aspects and embodiments will now be discussed with reference to the accompanying figures. Further aspects and embodiments will be apparent to those skilled in the art.

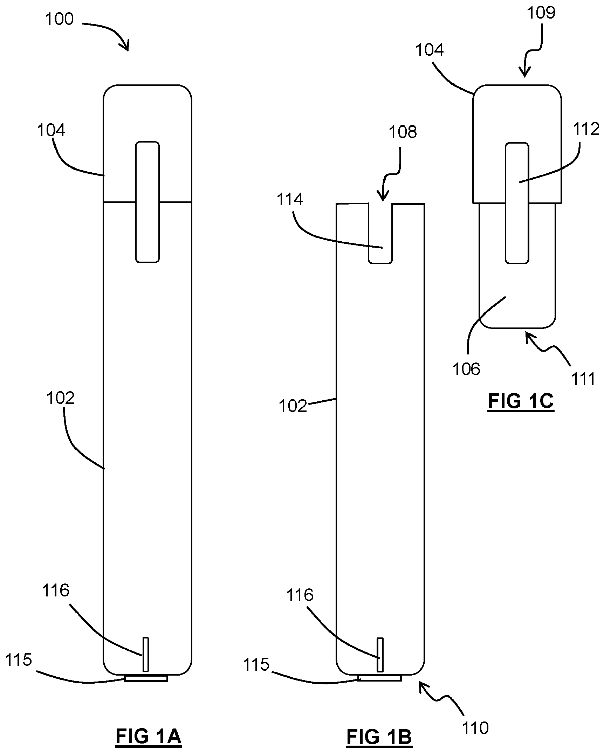

Fig. 1A shows a first embodiment of a smoking substitute system 100. In this example, the smoking substitute system 100 includes a device 102 and a component 104. The component 104 may alternatively be referred to as a "pod", "cartridge" or "cartomizer". It should be appreciated that in other examples (i.e. open systems), the device may be integral with the component. In such systems, a tank of the aerosol delivery system may be accessible for refilling the device.

In this example, the smoking substitute system 100 is a closed system vaping system, wherein the component 104 includes a sealed tank 106 and is intended for single-use only. The component 104 is removably engageable with the device 102 (i.e. for removal and replacement). Fig. 1A shows the smoking substitute system 100 with the device 102 physically coupled to the component 104, Fig. 1B shows the device 102 of the smoking substitute system 100 without the component 104, and Fig. 1C shows the component 104 of the smoking substitute system 100 without the device 102.

The device 102 and the component 104 are configured to be physically coupled together by pushing the component 104 into a cavity at an upper end 108 of the device 102, such that there is an interference fit between the device 102 and the component 104. In other examples, the device 102 and the component may be coupled by screwing one onto the other, or through a bayonet fitting.

The component 104 includes a mouthpiece portion 109 at an upper end of the component 104, and one or more air inlets (not shown) in fluid communication with the mouthpiece portion 109 such that air can be drawn into and through the component 104 when a user inhales through the mouthpiece portion. The tank 106 containing e-liquid is located at the lower end 111 of the component 104.

The tank 106 includes a window 112, which allows the amount of e-liquid in the tank 106 to be visually assessed. The device 102 includes a slot 114 so that the window 112 of the component 104 can be seen whilst the rest of the tank 106 is obscured from view when the component 104 is inserted into the cavity at the upper end 108 of the device 102.

The lower end 110 of the device 102 also includes a light 116 (e.g. an LED) located behind a small translucent cover. The light 116 may be configured to illuminate when the smoking substitute system 100 is activated. Whilst not shown, the component 104 may identify itself to the device 102, via an electrical interface, RFID chip, or barcode.

The lower end 110 of the device 102 also includes a charging connection 115, which is usable to charge a battery within the device 102. The charging connection 115 can also be used to transfer data to and from the device, for example to update firmware thereon.

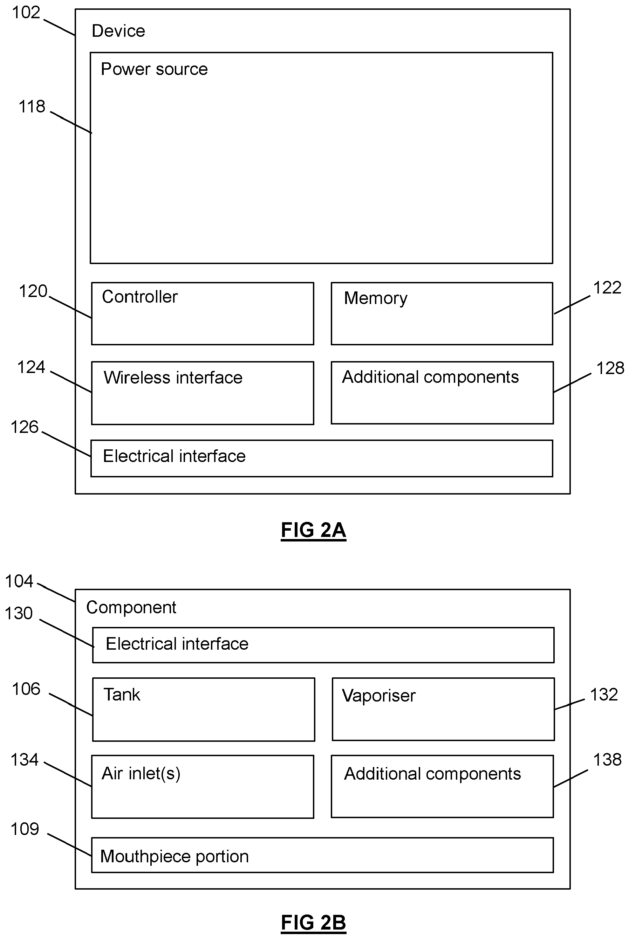

Figs. 2A and 2B are schematic drawings of the device 102 and component 104. As is apparent from Fig. 2A, the device 102 includes a power source 118, a controller 120, a memory 122, a wireless interface 124, an electrical interface 126, and, optionally, one or more additional components 128.

The power source 118 is preferably a battery, more preferably a rechargeable battery. The controller 120 may include a microprocessor, for example. The memory 122 preferably includes non-volatile memory. The memory may include instructions which, when implemented, cause the controller 120 to perform certain tasks or steps of a method.

The wireless interface 124 is preferably configured to communicate wirelessly with another device, for example a mobile device, e.g. via Bluetooth^{®}. To this end, the wireless interface 124 could include a Bluetooth^{®} antenna. Other wireless communication interfaces, e.g. WiFi^{®}, are also possible. The wireless interface 124 may also be configured to communicate wirelessly with a remote server.

The electrical interface 126 of the device 102 may include one or more electrical contacts. The electrical interface 126 may be located in a base of the aperture in the upper end 108 of the device 102. When the device 102 is physically coupled to the component 104, the electrical interface 126 is configured to transfer electrical power from the power source 118 to the component 104 (i.e. upon activation of the smoking substitute system 100).

The electrical interface 126 may also be used to identify the component 104 from a list of known components. For example, the component 104 may be a particular flavour and/or have a certain concentration of nicotine (which may be identified by the electrical interface 126). This can be indicated to the controller 120 of the device 102 when the component 104 is connected to the device 102. Additionally, or alternatively, there may be a separate communication interface provided in the device 102 and a corresponding communication interface in the component 104 such that, when connected, the component 104 can identify itself to the device 102.

The additional components 128 of the device 102 may comprise the light 116 discussed above.

The additional components 128 of the device 102 also comprises the charging connection 115 configured to receive power from the charging station (i.e. when the power source 118 is a rechargeable battery). This may be located at the lower end 110 of the device 102.

The additional components 128 of the device 102 may, if the power source 118 is a rechargeable battery, include a battery charging control circuit, for controlling the charging of the rechargeable battery. However, a battery charging control circuit could equally be located in a charging station (if present).

The additional components 128 of the device 102 may include a sensor, such as an airflow (i.e. puff) sensor for detecting airflow in the smoking substitute system 100, e.g. caused by a user inhaling through a mouthpiece portion 136 of the component 104. The smoking substitute system 100 may be configured to be activated when airflow is detected by the airflow sensor. This sensor could alternatively be included in the component 104. The airflow sensor can be used to determine, for example, how heavily a user draws on the mouthpiece or how many times a user draws on the mouthpiece in a particular time period.

The additional components 128 of the device 102 may include a user input, e.g. a button. The smoking substitute system 100 may be configured to be activated when a user interacts with the user input (e.g. presses the button). This provides an alternative to the airflow sensor as a mechanism for activating the smoking substitute system 100.

As shown in Fig. 2B, the component 104 includes the tank 106, an electrical interface 130, an aerosol generation unit 132, one or more air inlets 134, a mouthpiece portion 136, and one or more additional components 138.

The electrical interface 130 of the component 104 may include one or more electrical contacts. The electrical interface 126 of the device 102 and an electrical interface 130 of the component 104 are configured to contact each other and thereby electrically couple the device 102 to the component 104 when the lower end 111 of the component 104 is inserted into the upper end 108 of the device 102 (as shown in Fig. 1A). In this way, electrical energy (e.g. in the form of an electrical current) is able to be supplied from the power source 118 in the device 102 to the vaporiser 132 in the component 104.

The vaporiser 132 is configured to heat and vaporise e-liquid contained in the tank 106 using electrical energy supplied from the power source 118. As will be described further below, the vaporiser 132 includes a heating element and a wick. The wick draws e-liquid from the tank 106 and the heating element heats the e-liquid to vaporise the e-liquid.

The one or more air inlets 134 are preferably configured to allow air to be drawn into the smoking substitute system 100, when a user inhales through the mouthpiece portion 109. When the component 104 is physically coupled to the device 102, the air inlets 134 receive air, which flows to the air inlets 134 along a gap between the device 102 and the lower end 111 of the component 104.

In operation, a user activates the smoking substitute system 100, e.g. through interaction with a user input forming part of the device 102 or by inhaling through the mouthpiece portion 136 as described above. Upon activation, the controller 120 may supply electrical energy from the power source 118 to the aerosol generation unit 132 (via electrical interfaces 126, 130), which may cause the aerosol generation unit 132 to heat e-liquid drawn from the tank 106 to produce a vapour which is inhaled by a user through the mouthpiece portion 109.

An example of one of the one or more additional components 138 of the component 104 is an interface for obtaining an identifier of the component 104. As discussed above, this interface may be, for example, an RFID reader, a barcode, a QR code reader, or an electronic interface which is able to identify the component. The component 104 may, therefore include any one or more of an RFID chip, a barcode or QR code, or memory within which is an identifier and which can be interrogated via the electronic interface in the device 102.

It should be appreciated that the smoking substitute system 100 shown in figures 1A to 2B is just one exemplary implementation of a smoking substitute system. For example, the system could otherwise be in the form of an entirely disposable (single-use) system or an open system in which the tank is refillable (rather than replaceable).

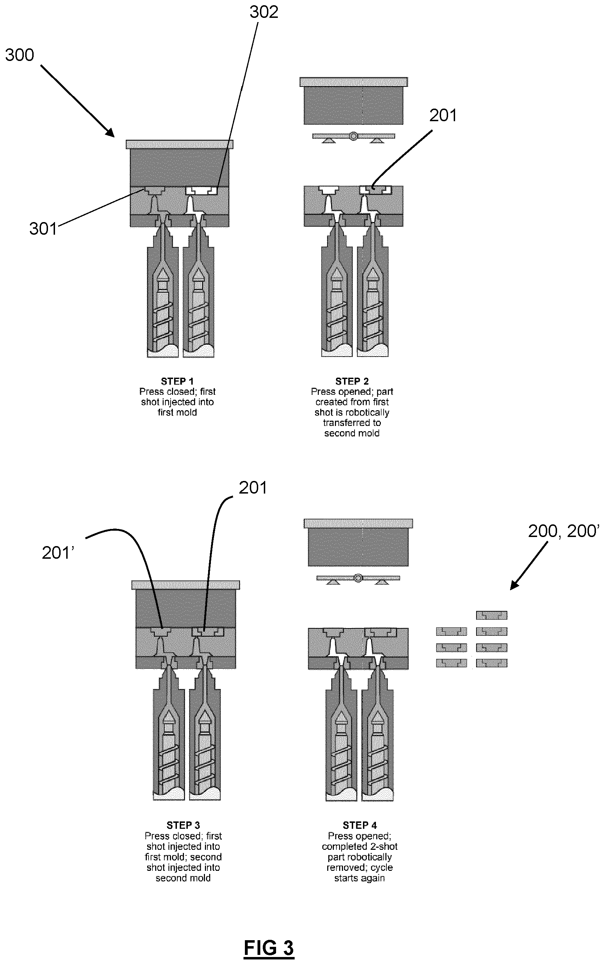

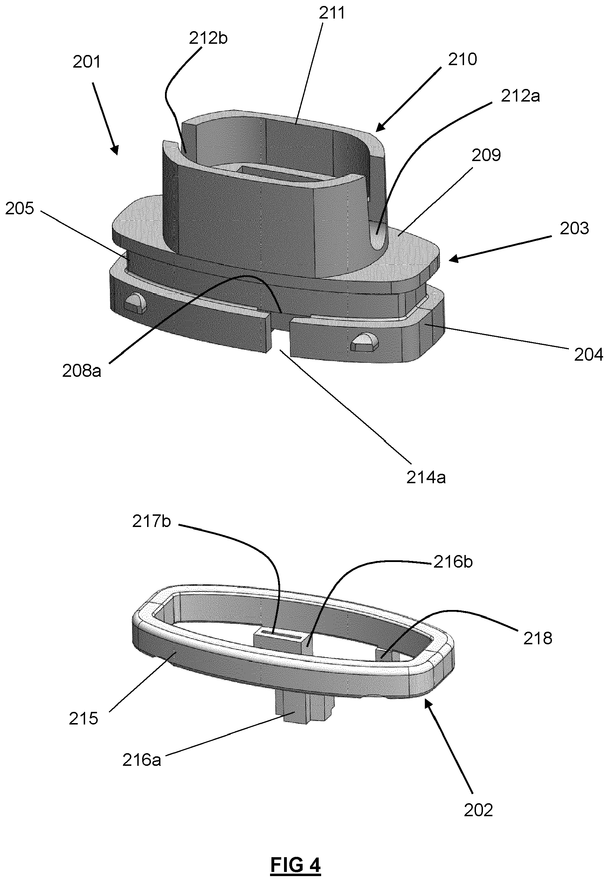

Figure 3 shows a method of manufacturing a base portion 200 for the component 104. A first mould 301 and second mould 302 are provided in a single press 300 which is sealed. Polypropylene is injected into the first mould to form a rigid plastic vaporiser support 201 which is shown in Figure 4.

The vaporiser support 201 comprises end portion 203 having a longitudinally-extending perimeter wall 204. The longitudinally-extending perimeter wall 204 comprises a perimeter groove 205 extending entirely around the perimeter wall 204 of the end portion 203.

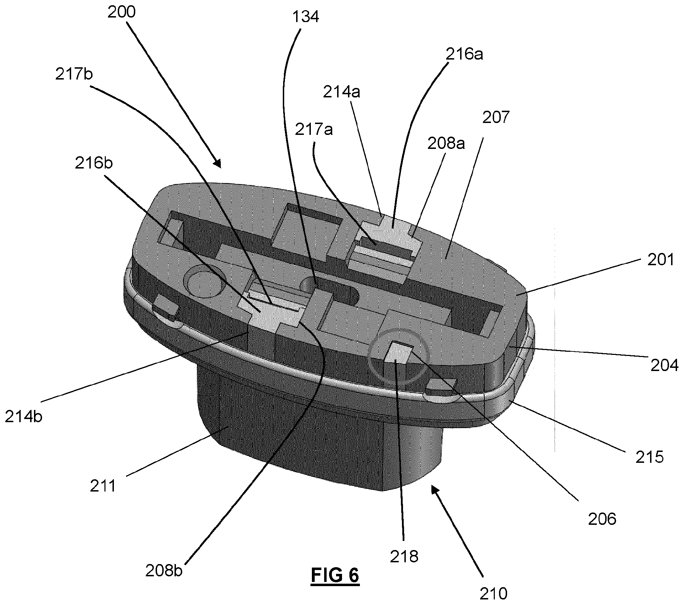

The vaporiser support 201 comprises a longitudinally-extending moulding gate 206 (seen in Figure 6) in the perimeter wall 204 of the end portion 203 extending between an end face 207 of the end portion 203 and the perimeter groove 205. The moulding gate 206 comprises a longitudinally-extending channel recessed into the perimeter wall 204.

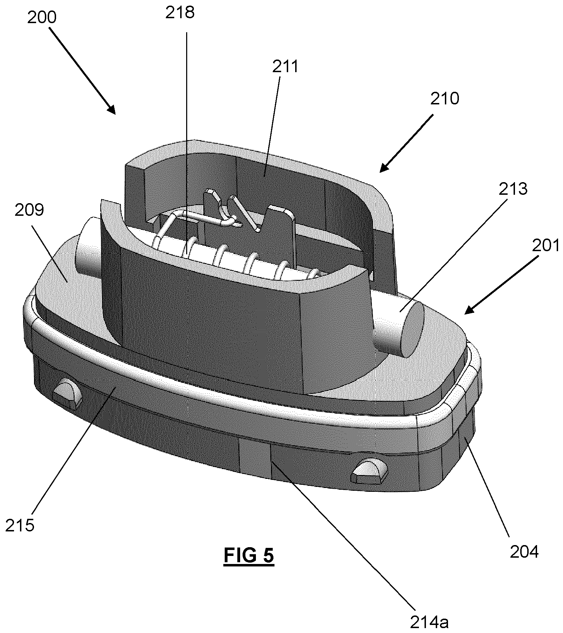

The end portion 203 comprises a pair of apertures 208a, 208b (only one visible in Figure 4) extending from the end face 207 to an opposing inner face 209 of the end portion 203. The inner face 209 of the end portion 203 comprises a support portion 210 for supporting a wick 213 (shown in Figure 5). The support portion 210 is upstanding from the inner face 209 of the end portion 203 and comprises an annular wall 211 having opposing channels 212a, 212b for receiving the wick 213.

The perimeter wall 204 of the end portion 204 comprises two longitudinally-extending gasket channels 214a, 214b (distinct and remote from the moulding gate 206) extending from the perimeter groove 205 to the end face 207 proximal the apertures 208a, 208b.

After opening the press 300, the vaporiser support 201 is moved using a robotic arm from the first mould 301 to the second mould 302 (step 2 in Figure 3).

The press 300 is re-sealed and thermoplastic polyurethane is injected into the second mould 302 (step 3 in Figure 3) to form the over-moulded compressible gasket portion 202 which is shown in Figure 4. The polyurethane is injected into the moulding gate 206 and flows into the perimeter groove to form a perimeter gasket 215 which is encircles the perimeter wall 204 of the end portion 203 of the vaporiser support 201 as seen in Figures 5 and 6. The perimeter gasket 215 extends radially/laterally from the perimeter wall 204 i.e. is proud of the surface of the perimeter wall 204.

After flowing into the perimeter groove 205 to form the perimeter gasket 215, the polyurethane flows into the two gasket channels 214a, 214b which are in fluid communication with the apertures 208a, 208b to form two contact gaskets 216a, 216b which fill the gasket channels 214a, 214b and the apertures 208a, 208b. The contact gaskets 216a, 216b each have a respective gasket aperture 217a, 217b. The moulding gate 206 of the vaporiser support is filled with a gate portion 218 of the gasket portion 202.

Finally, the base portion 200 comprising the vaporiser support 201 and the gasket portion 202 is removed from the press 300 using the robotic arm.

After removal of the base portion 200 from the second mould 302, the perimeter gasket 215 is sealed against the inner surface of a tank housing (not shown).

The air inlet 134 is provided in the end face 207 of the end portion and extends through the end portion to the inner face 209 within the annular wall 211 of the support portion 210. The annular wall 211 defines a vaporising chamber in which the wick 213 and coiled heating element 218 is mounted and through which airflow passes from the inlet 134 to an outlet in a mouthpiece portion (not shown).

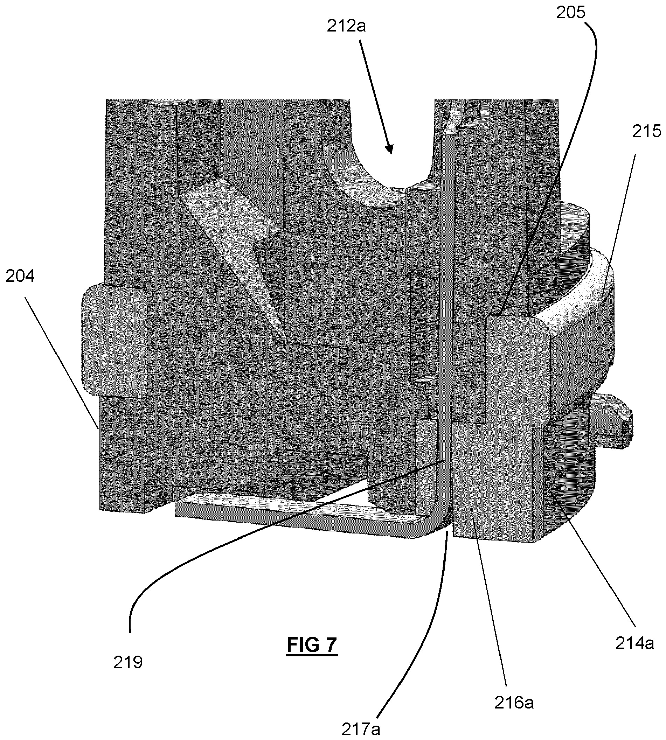

Electrical contacts (only one shown) 219 are inserted through each of the gasket apertures 218a, 219b (as shown in Figure 7) for connection with the heating element 218.

In this way, the perimeter gasket 215 and the contact gaskets 216a, 216b seal both the tank and the electrical contacts and are formed in a single injection moulding step.

As can be seen in step 3 of Figure 3 as the polyurethane is injected into the second mould 302, polypropylene may be injected into the first mould 301 to form a second rigid plastic vaporiser support 201'. The second vaporiser support 201' may then be moved (e.g. using the robotic arm) to the second mould 302 after the base portion 200 has been removed from the second mould 302 for subsequent injection of polyurethane into the second mould 302 to form a second base portion 200'.

While exemplary embodiments have been described above, many equivalent modifications and variations will be apparent to those skilled in the art when given this disclosure. Accordingly, the exemplary embodiments set forth above are considered to be illustrative and not limiting.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A method of manufacturing a base portion for an aerosol delivery component (e.g. a smoking substitute component), the method comprising the steps of:
injecting a first plastic into a first mould to form a rigid plastic vaporiser support;
transferring the vaporiser support to a second mould; and
injecting a second plastic into the second mould to form a compressible sealing gasket portion on the vaporiser support to thereby form the base portion.

2. A method according to claim 1 comprising injecting the first plastic into the first mould so as to form a rigid plastic vaporiser support having an end portion comprising a longitudinally-extending perimeter wall having a perimeter groove.

3. A method according to claim 2 comprising injecting the first plastic into the first mould so as to form a longitudinally-extending moulding gate in the perimeter wall of the end portion.

4. A method according to claim 2 or 3 comprising injecting the second plastic to form a perimeter gasket in the perimeter groove of the end portion of the vaporiser support.

5. A method according to any one of claims 2 to 4 comprising injecting the first plastic into the first mould so that the end portion comprises at least one aperture and subsequently injecting the second plastic to form a contact gasket in the at least one aperture.

6. A method according to any one of the preceding claims wherein the first and second moulds are provided in a single press.

7. A method according to any one of the preceding claims wherein as the second plastic is injected into the second mould, the first plastic is injected into the first mould to form a second rigid plastic vaporiser support.

8. An integrally moulded base portion for an aerosol delivery component, the base portion comprising:
a vaporiser support formed of a rigid plastic; and
a sealing gasket portion formed of compressible plastic over-moulded on the vaporiser support for sealing against an internal surface of the aerosol delivery component.

9. A base portion according to claim 8 wherein the vaporiser support comprises an end portion with a longitudinally-extending perimeter wall having a perimeter groove and wherein the sealing gasket comprises a perimeter gasket located in the perimeter groove.

10. A base portion according to claim 9 wherein the perimeter comprises a longitudinally-extending moulding gate extending between an end face of the end portion and the perimeter groove wherein the moulding gate is filled with the compressible plastic.

11. A base portion according to claim 10 wherein the compressive plastic in the moulding gate is flush with the perimeter wall of the end portion.

12. A base portion according to any one of claims 9 to 11 further comprising at least one contact gasket formed of the compressible plastic, the at least one contact gasket lining a respective at least one aperture formed in the end portion of the vaporiser support.

13. An aerosol delivery component comprising a base portion according to any one of claims 9 to 12, wherein the perimeter gasket is sealed against the inner surface of a tank housing.

14. A component according to claim 13 further comprising a vaporiser having a wick with a coiled heating element mounted on a support portion of the vaporiser support.

15. A component according to claim 13 or 14 wherein the component is a smoking substitute component.
